# EUROPÄISCHE PATENTSCHRIFT

(11) **EP 3 914 502 B1**
(45) Veröffentlichungstag und Bekanntmachung des Hinweises auf die Patenterteilung: **11.10.2023**
(21) Anmeldenummer: 21705134.1
(22) Anmeldetag: 10.02.2021
(51) Int. Cl.: B62D 5/04, F16H 55/24, F16C 35/077

(54) **LAGERANORDNUNG**
BEARING ASSEMBLY
ENSEMBLE PALIER

(30) Priorität: 12.02.2020 DE 102020201761
(43) Veröffentlichungstag der Anmeldung: 01.12.2021
(73) Patentinhaber: thyssenkrupp Presta AG, 9492 Eschen (LI); thyssenkrupp AG, 45143 Essen (DE)
(72) Erfinder: MÖLLER, Dirk, 9466 Sennwald (CH)
(74) Vertreter: thyssenkrupp Intellectual Property GmbH
(86) Internationale Anmeldenummer: PCT/EP2021/053117
(87) Internationale Veröffentlichungsnummer: WO 2021/160626

(56) Entgegenhaltungen:
- WO-A1-2017/153083
- WO-A1-2019/174963
- DE-A1-102009 054 655
- DE-A1-102012 103 147
- DE-B3-102016 211 714
- DE-U1-202016 103 794
- US-A1- 2018 058 556

## Beschreibung

### Stand der Technik

Die vorliegende Erfindung betrifft eine Lageranordnung zur Lagerung einer mit einem Schneckenrad kämmenden Schneckenwelle in einem Gehäuse einer elektromechanischen Servolenkung, umfassend ein erstes Drehlager, ein zweites Drehlager und einen Schwenkring, wobei das erste Drehlager derart ausgebildet ist, eine Verschwenkbewegung der Schneckenwelle zuzulassen, wobei das zweite Drehlager dem Schwenkring angeordnet ist. Weiter betrifft die Erfindung eine elektromechanische Servolenkung mit einem Antriebsmodul, welches einen Antriebsmotor, ein Gehäuse und ein Schneckengetriebe umfasst, wobei eine Schneckenwelle des Schneckengetriebes in einer Lageranordnung gelagert ist.

In elektromechanischen Servolenkungen wird über einen Elektromotor ein Drehmoment erzeugt, das auf ein Getriebe übertragen und dort dem vom Fahrer gestellten Lenkmoment überlagert wird.

Solche Lageranordnungen sind aus dem Stand der Technik, beispielsweise aus der DE 10 2012 103 147 A1, bereits bekannt. Sie werden beispielsweise in Lenkkraftunterstützungssystemen eingesetzt, wobei sie einen Lenkkraftunterstützungsmotor aufweisen, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Gehäuse drehbar gelagert sind. Aufgrund der Geometrie der Zähne von Schneckenwelle und Schneckenrad wird die Schneckenwelle im Lastfall von dem Schneckenrad weggedrückt. Dies führt zu unerwünschtem Getriebespiel zwischen Schneckenwelle und Schneckenrad. Zusätzliches Getriebespiel zwischen Schneckenwelle und Schneckenrad wird beispielsweise durch Maßtoleranzen oder Verschleiß der Bauelemente verursacht. Getriebespiel bewirkt unerwünschte Geräusche im Betrieb des Schneckenradgetriebes. Insbesondere beim Lenken mit unmittelbar aufeinanderfolgenden, wechselnden Lenkeinschlagsrichtungen, auch als Wechsellenken bezeichnet, treten diese unerwünschten Geräusche auf.

Eine Lageranordnung eines Lenkgetriebes ist beispielsweise auch aus
DE 10 2017 207 708 A1 bekannt. Die Lageranordnung umfasst einen Schwenkring über dessen Torsionsstege die Lage einer Schwenkachse definierbar ist, indem ein Außenring des Schwenkrings gegenüber dem Innenring des Schwenkrings verschwenkbar ausgestaltet ist. Die Torsionsstege weisen einen radialen Versatz zum Zentrum des Schwenkrings auf, sodass die Schwenkachse in den Radius des Zahneingriffs verlagert wird. Dadurch kann die Ausbildung von Reaktionsmomenten, welche sich aus den Verzahnungskräften im Verzahnungsbereich zwischen Schneckenwelle und Schneckenrad ergeben, reduziert werden.

Als nachteilig erweist sich diese Lösung allerdings dahingehend, dass das Reaktionsmoment im Schwenklager richtungsabhängig ist. Es verstärkt oder schwächt das Abheben der Schnecke in Abhängigkeit davon, welche Betriebslast und Radialkraft auf die Schnecke wirkt. Dadurch entstehen unerwünschte Klappergeräusche. Solche Klappergeräusche werden auch als Rattle Noise bezeichnet.

In der DE 10 2009 054 655 A1 ist des Weiteren ein Lenkgetriebe mit einem Schraubritzel beschrieben, das über eine Welle mit einem Anrieb verbunden werden kann. Das Lenkgetriebe umfasst eine Wellenlagerung mit einem ersten Drehlager und einem zweiten Drehlager. Eine Halterung für das erste Drehlager erlaubt dabei aufgrund von vorgesehenen Aussparungen eine Schwenkbewegung für einen ringförmigen Abschnitt der Halterung, was sich geräuschmindernd auf die Wellenlagerung auswirkt. Je nach wirkender Last schwächt sich dabei der positive Effekt dieser Halterung ab. Die DE 10 2008 040 673 A1 offenbart eine ähnliche Wellenlagerung wie die DE 10 2009 054 655 A1, welche den Oberbegriff des Anspruchs 1 offenbart.

Eine Getriebeeinheit für ein Kraftfahrzeug mit einer Schneckenwelle, die mit einem Schneckenrad zusammenwirkt, wird auch von der DE 20 2016 103 794 U1 offenbart. Die Schneckenwelle ist durch ein schwenkbares Drehlager und ein loses Drehlager gelagert. Aus der US 2018/0058556 A1 ist zudem eine Lageranordnung zur Lagerung einer mit einem Schneckenrad kämmenden Schneckenwelle in einem Gehäuse offenbart, wobei diese Lageranordnung ein erstes Drehlager, ein zweites Drehlager und eine Federscheibe umfasst. Die Federscheibe ist mit Schrauben mit dem Gehäuse verbunden. Die Federscheibe selbst ist nicht dazu bestimmt, den auf die Schneckenwelle wirkenden Axialkräften zu widerstehen. Kippbewegung der Schneckenwelle setzt die Federscheibe geringen Widerstand entgegen. Gegenüber den auf das Hauptlager wirkenden Radialkräften verhält sich die Federscheibe starr.

Eine weitere Lageranordnung für eine Schneckenwelle umfassend ein erstes Drehlager und ein zweites Drehlager offenbart die DE 10 2016 211 714 B3. Das zweite Drehlager ist in einem Schwenkring verschwenkbar angeordnet. Axial beiderseits des Schwenkrings sind zwei kreisringartige Federelemente angeordnet. Die Federelemente stützen sich an dem Gehäuse der Lageranordnung und dem Drehlager ab. Durch die Federelemente soll die Steifigkeit des Drehlagers gegenüber Verschiebung in axialer Richtung verstärkt werden, wobei die Steifigkeit gegenüber Schwenkbewegungen im Wesentlichen unbeeinflusst bleiben soll.

Eine Lageranordnung, bei der das Festlager von zwei Lagerschalen umschlossen ist und bei der zwischen Festlager und Lagerschale jeweils ein Federelement angeordnet ist, wird ferner von der WO 2019/174963 A1 offenbart.

Im Lichte der vorangehend erläuterten Problematik der bekannten Lageranordnungen liegt der vorliegenden Erfindung die Aufgabe zugrunde, eine verbesserte elektromechanische Servolenkung sowie eine verbesserte Lageranordnung zur Lagerung einer mit einem Schneckenrad kämmenden Schneckenwelle in einem Gehäuse einer elektromechanischen Servolenkung zur Verfügung zu stellen, wobei die Lageranordnung insbesondere auch bei sich ändernden Lasten einen gleichbleibend zuverlässigen, geräuscharmen Betrieb ermöglichen soll, und vorteilhafterweise einfach aufgebaut ist.

### Darstellung der Erfindung

Zur Lösung der Aufgabe wird eine Lageranordnung zur Lagerung einer mit einem Schneckenrad kämmenden Schneckenwelle in einem Gehäuse einer elektromechanischen Servolenkung vorgeschlagen. Die Lageranordnung umfasst ein erstes Drehlager, ein zweites Drehlager und einen Schwenkring, wobei das erste Drehlager derart ausgebildet ist, eine Verschwenkbewegung der Schneckenwelle zuzulassen, wobei der Schwenkring eine erste Schwenkringkomponente und eine zweite Schwenkringkomponente umfasst und ausgebildet ist, federnd zwischen dem zweiten Drehlager und dem Gehäuse zu wirken. Das zweite Drehlager ist in dem Schwenkring zumindest teilweise zwischen der ersten Schwenkringkomponente und der zweiten Schwenkringkomponente angeordnet. Erfindungsgemäß weist die erste Schwenkringkomponente zwei erste Punkte auf, bezüglich derer die erste Schwenkringkomponente federnd ausgebildet ist, und die zweite Schwenkringkomponente weist erfindungsgemäß zwei zweite Punkte auf, bezüglich derer die zweite Schwenkringkomponente federnd ausgebildet ist. Die Punkte sind dabei keine Punkte im streng mathematischen Sinne, sondern weisen insbesondere eine gewisse flächige Ausdehnung auf, die jedoch in Bezug auf die jeweilige Schwenkringkomponente um ein Vielfaches kleiner ausgebildet ist. Insbesondere sind die zwei ersten Punkte und die zwei zweiten Punkte jeweils gefederte Auflagepunkte.

Gemäß einer weiteren vorteilhaften Ausgestaltung ist vorgesehen, dass die ersten zwei Punkte eine erste Achse bilden und die zweiten zwei Punkte eine zweite Achse bilden. Das heißt insbesondere, dass eine Gerade durch die ersten zwei Punkte gelegt wird und eine Gerade durch die zweiten zwei Punkte gelegt wird. Dadurch, dass die Schwenkringkomponenten bezüglich der Punkte federnd ausgebildet sind, lässt sich die jeweilige Schenkringkomponente insbesondere bezüglich der durch das jeweilige Punktepaar gebildeten Achse verschwenken. Vorteilhafterweise sind die erste Achse und die zweite Achse nicht deckungsgleich, die ersten zwei Punkte und die zweiten zwei Punkte sind also insbesondere an unterschiedlichen Stellen angeordnet, sodass die Achsen durch die Punkte verschieden verlaufen. Insbesondere ist vorgesehen, dass die Achsen parallel versetzt zueinander verlaufen.

In vorteilhafter Weise ist der Schwenkring derart ausgebildet, die Schneckenwelle gegen das Schneckenrad vorzuspannen. Durch die Vorspannung ist ein Abheben der Schneckenwelle von dem Schneckenrad verhindert, sodass das Schneckengetriebe im Wesentlichen spielfrei ist.

Bevorzugt ist der Schwenkring derart ausgebildet, eine Schwenkachse zum Verschwenken der Schneckenwelle zu bilden. Dadurch kann die Schneckenwelle in Richtung des Schneckenrads gedrückt bzw. verschwenkt werden. Mit anderen Worten ist dadurch ermöglicht, ein Abheben der Schneckenwelle von dem Schneckenrad zu verhindern oder zu reduzieren. Dies verhindert bzw. reduziert das Getriebespiel und verhindert somit unerwünschte Klappergeräusche im Betrieb des Schneckengetriebes. Die Schwenkachse ist insbesondere abhängig von der Ausbildung der zwei ersten Punkte der ersten Schwenkringkomponente und den zwei zweiten Punkten von der zweiten Schwenkringkomponente. Insbesondere ist vorgesehen, dass der Schwenkring derart ausgebildet ist, dass die Schwenkachse durch die zwei ersten Punkte und die zwei zweiten Punkte gebildet ist.

Weiter bevorzugt ist der Schwenkring derart ausgebildet, dass die Schwenkachse zum Verschwenken der Schneckenwelle orthogonal bzw. normal zum Radialvektor des Schneckenrads verläuft. Eine solche Schwenkbewegung ermöglicht einen vergleichsweise einfachen Aufbau der Lageranordnung.

Noch weiter bevorzugt ist der Schwenkring derart ausgebildet, dass die Schwenkachse zum Verschwenken der Schneckenwelle durch die gefederten Auflagepunkte gebildet ist. Die Auflagepunkte haben insbesondere einen definierten Abstand zur Drehachse und liegen relativ zueinander, sodass keine Bewegung bzw. kein Schleifen an den Auflagepunkten auftritt.

In vorteilhafter Weise verändert bzw. verschiebt der Schwenkring über die zwei ersten Punkte und die zwei zweiten Punkte, insbesondere über die gefederten Auflagepunkte, die Position bzw. räumliche Lage der Schwenkachse abhängig von der Drehrichtung der Schneckenwelle. Mit anderen Worten ist der Schwenkring derart ausgebildet, dass die Position bzw. räumliche Lage der Schwenkachse abhängig von der Drehrichtung der Schneckenwelle ist. Die Schwenkachse kann parallel verschoben werden, wodurch sich deren Lage ändert. Die Drehrichtung der Schneckenwelle kann auch als Lastrichtung bezeichnet werden.

In weiter vorteilhafter Weise verändert bzw. verschiebt der Schwenkring über die zwei ersten Punkte und die zwei zweiten Punkte, insbesondere über die gefederten Auflagepunkte, die Position bzw. räumliche Lage der Schwenkachse abhängig von dem Betrag des zu überwindenden Lastmoments. Mit anderen Worten ist der Schwenkring derart ausgebildet, dass die Position bzw. räumliche Lage der Schwenkachse abhängig von dem Betrag des zu überwindenden Lastmoments ist. Die Schwenkachse kann parallel verschoben werden, wodurch sich deren Lage ändert.

Gemäß einer weiteren vorteilhaften Ausgestaltung der Lageranordnung weist das zweite Drehlager einen Außenring auf, wobei der Außenring eine Schulter oder einen Absatz ausbildet, an der die erste Schwenkringkomponente und/oder die zweite Schwenkringkomponente angeordnet ist. Der Absatz oder die Schulter sind besonders bevorzugt einstückig am Außenring ausgebildet. Vorteilhafterweise lässt sich hierdurch das Design des Schwenkrings vereinfachen. Insbesondere lässt sich ein Schwenkring, welches ausschließlich die erste Schwenkringkomponente und die zweite Schwenkringkomponente umfasst, und somit zweiteilig ist, realisieren.

Vorteilhafterweise dient die Schulter beziehungsweise der Absatz des Außenrings für die erste Schwenkringkomponente und/oder die zweite Schwenkringkomponente als mechanischer Anschlag. Vorteilhafterweise wird ein weiterer Anschlag durch ein die Lagerandordnung umgebendes Gehäuse gebildet. Vorteilhafterweise kann dadurch ein zusätzliches Sicherungselement entfallen, welches die erste Schwenkringkomponente und die zweite Schwenkringkomponente in ihrer Anordnungsposition sichert.

Insbesondere ist vorgesehen, dass das zweite Drehlager einen Außenring aufweist, wobei der Außenring eine Schulter ausbildet, wobei die Schulter von dem Schwenkring formschlüssig aufgenommen ist. Insbesondere lässt sich hierdurch realisieren, dass die erste Schwenkringkomponente einer Seite des zweiten Drehlagers zugeordnet ist und die zweite Schwenkringkomponente der anderen Seites des zweiten Drehlagers zugeordnet ist, ohne dass die Schwenkringkomponenten das Drehlager vollständig umgeben. Vorteilhafterweise lässt sich hierdurch ein flaches Design des Schwenkrings realisieren.

In einer weiteren vorteilhaften Ausführung der Lageranordnung umfasst der Schwenkring einen geschlitzten Ring, insbesondere einen geschlitzten Ring als die erste Schwenkringkomponente, und ein hülsenförmiges Element, insbesondere ein hülsenförmiges Element als die zweite Schwenkringkomponente. Das hülsenförmige Element weist insbesondere eine zentrale Ausnehmung auf. Das hülsenförmige Element ist insbesondere kreisringförmig und umfasst vorteilhafterweise einen aufgestellten Rand. Der aufgestellte Rand ist insbesondere in Umfangsrichtung durchgängig, das heißt mit geschlossener Zylindermantelfläche. In einer Ausgestaltungsvariante ist der aufgestellte Rand in Umfangsrichtung nicht durchgängig, das heißt der aufgestellte Rand weist eine unterbrochene Zylindermantelfläche auf. Der geschlitzte Ring und das hülsenförmige Element mit zentraler Ausnehmung bilden vorteilhafterweise gemeinsam die Schwenkachse zum Verschwenken der Schneckenwelle. Sowohl der geschlitzte Ring als auch das hülsenförmige Element mit zentraler Ausnehmung haben vorteilhafterweise eine in Axialrichtung wirkende Federung. Die Federung beziehungsweise die Federelemente der Federung sind dabei insbesondere als Elastomerelemente und/oder Federzungen und/oder Biegebalken ausgeführt.

Bei einem Elastomerelement als Federelement ist insbesondere ein keilförmiges Elastomerelement vorgesehen, welches einen lastabhängigen Auflagepunkt aufweist, und welches vorteilhafterweise so ausgeführt ist, dass auch Radialkräfte übertragen werden können. Die zwei ersten Punkte und/oder die zwei zweiten Punkte einer Schwenkringkomponente bilden dabei vorteilhafterweise jeweils die lastabhängigen Auflagepunkte.

Bei einem Biegebalken als Federelement ist ebenfalls insbesondere vorgesehen, dass ein solcher Biegebalken einen lastabhängigen Auflagepunkt aufweist. Vorteilhafterweise sind die Biegebalken einer Schwenkachse fest mit dem das Lager fassenden Gehäuse verbunden, um Radialkräfte aufzunehmen. Die Federung mit Biegebalken ist ebenfalls insbesondere durch die zwei ersten Punkte und die zwei zweiten Punkte realisiert, wobei diese Punkte insbesondere die lastabhängigen Auflagepunkte sind.

Bevorzugterweise ist das Drehlager mit dem geschlitzten Ring und dem hülsenförmigen Element verbunden. Insbesondere kann das Drehlager zwischen dem geschlitzten Ring und dem hülsenförmigen Element, vorzugsweise spielfrei, aufgenommen sein. Beispielsweise kann das Drehlager vermittels seines Außenrings mit dem geschlitzten Ring und dem hülsenförmigen Element verbunden sein. Einerseits kann der Außenring eine Schulter oder einen Absatz aufweisen, wobei die Schulter bzw. der Absatz als mechanischer Anschlag für den geschlitzten Ring und/oder das hülsenförmige Element dient. Auf diese Weise ist das Drehlager in einem "Sandwich-Aufbau" in Axialrichtung zwischen dem geschlitzten Ring und dem hülsenförmigen Element fixiert. Andererseits kann der geschlitzte Ring und/oder das hülsenförmige Element derart ausgebildet sein, den Außenring des Drehlagers gänzlich zu umfassen. Ein zusätzliches Befestigungsmittel zur Schaffung des Schwenkrings erübrigt sich dadurch. So vereinfacht sich der Aufbau des Schwenkrings und somit der Aufbau der Lageranordnung.

Weiter bevorzugterweise sind in dem geschlitzten Ring ein erster kreisbogenförmiger, radial innerer Schlitz und ein zweiter, kreisbogenförmiger, radial äußerer Schlitz ausgebildet, wobei der erste Schlitz und der zweite Schlitz sich in Umfangsrichtung teilweise überlagern, sodass ein erster, radial innerer Kreisring, insbesondere ein Teilkreisring, und ein zweiter, radial äußerer Kreisring, insbesondere ein Teilkreisring, entstehen, wobei der erste Kreisring und der zweite Kreisring durch zwei Stege verbunden sind. Die Stege sind dabei insbesondere die zwei ersten Punkte der ersten Schwenkringkomponente. Die Stege können insbesondere als Materialverjüngung ausgebildet sein. Die Stege dienen vorteilhafterweise zur Federung des geschlitzten Rings in Axialrichtung des Schwenkrings und nehmen dadurch die auftretenden Radialkräfte auf. Die Stege spannen insbesondere Teilkreise auf, die durch die Schlitze gebildet sind. In der Lastrichtung, bei der das zweite Drehlager gegen den geschlitzten Ring gedrückt wird, bilden bzw. definieren hauptsächlich die zwei Stege des geschlitzten Rings die Schwenkachse. In einem solchen Lastfall entspricht die Schwenkachse im Wesentlichen der durch die zwei Stege, und somit insbesondere der durch die zwei ersten Punkte, verlaufenden Achse.

Noch weiter bevorzugterweise umfasst das hülsenförmige Element einen scheibenförmigen Abschnitt mit zentraler Ausnehmung. Vorteilhafterweise umfasst das hülsenförmige Element weiter einen mit dem scheibenförmigen Abschnitt an dessen radial äußerem Rand verbundenen, sich in Axialrichtung der Schneckenwelle erstreckenden Wandungsabschnitt. Insbesondere ist vorgesehen, dass in dem scheibenförmigen Abschnitt Zungen, insbesondere als die zwei zweiten Punkte der zweiten Schwenkringkomponente, ausgebildet sind, wobei die Zungen sich jeweils in Axialrichtung der Schneckenwelle erstrecken. Die Zungen dienen vorteilhafterweise zur Federung des hülsenförmigen Elements in Axialrichtung des Schwenkrings. In der Lastrichtung, bei der das zweite Drehlager gegen das hülsenförmige Element gedrückt wird, bilden bzw. definieren hauptsächlich die zwei Zungen, also insbesondere die zwei zweiten Punkte, des hülsenförmigen Elements die Schwenkachse. In einem solchen Lastfall entspricht die Schwenkachse im Wesentlichen der durch die zwei Zungen, und somit insbesondere der durch die zwei zweiten Punkte, verlaufenden Achse.

Die Zungen können derart positioniert sein, dass die die Zungen verbindende Achse, also insbesondere die zweite Achse, von einer durch die Längsachse der Schneckenwelle hindurchführenden Achse abweichend ist. Insbesondere sind die Zungen derart positioniert, dass die die Zungen verbindende Achse nicht eine durch die Längsachse der Schneckenwelle hindurchführende Achse ist. Insbesondere schneiden sich die Längsachse der Schneckenwelle und die die Zungen verbindende Achse bei dieser Ausgestaltung nicht und sind somit insbesondere voneinander beabstandet. Die die Zungen verbindende Achse verläuft bei dieser Ausgestaltung vorteilhafterweise nicht durch den Mittelpunkt des hülsenförmigen Elements. Insbesondere können die Längsachse der Schneckenwelle und die die Zungen verbindende Achse orthogonal zueinander sein. Vorteilhafterweise führt bei dieser Ausgestaltungsvariante die die Stege des geschlitzten Rings verbindende Achse, also insbesondere die erste Achse, durch die Längsachse der Schneckenwelle. Die Zungen spannen vorteilhafterweise einen Teilkreis auf.

Alternativ können die Zungen derart positioniert sein, dass die die Zungen verbindende Achse eine durch die Längsachse der Schneckenwelle hindurchführende Achse ist. Bei diesem Ausführungsbeispiel schneiden sich vorteilhafterweise die Längsachse der Schneckenwelle und die die Zungen verbindende Achse. Insbesondere können auch bei dieser Ausgestaltungsalternative die Längsachse der Schneckenwelle und die die Zungen verbindende Achse orthogonal zueinander sein. Bei dieser Ausgestaltungsalternative ist insbesondere vorgesehen, dass die die Stege des geschlitzten Rings verbindende Achse, also insbesondere die erste Achse, nicht eine durch die Längsachse der Schneckenwelle hindurchführende Achse ist. Insbesondere schneiden sich die Längsachse der Schneckenwelle und die Stege des geschlitzten Rings verbindende Achse bei dieser Ausgestaltung nicht und sind somit insbesondere voneinander beabstandet.

In vorteilhafter Weise können die Zungen einander in Umfangsrichtung entgegengesetzt orientiert sein. Mit anderen Worten können die Zungen in Bezug auf eine gedachte, durch den Mittelpunkt des Schwenkrings verlaufende Symmetrieachse gegenüberliegend angeordnet sein.

In einer weiteren Ausführung der Lageranordnung umfasst der Schwenkring eine erste Aufnahmeeinheit mit zentraler Ausnehmung und eine zweite Aufnahmeeinheit mit zentraler Ausnehmung, wobei die erste Aufnahmeeinheit und die zweite Aufnahmeeinheit jeweils ein ringförmiges Element und eine Federeinheit zur in Axialrichtung wirkenden Federung umfassen. Die erste Aufnahmeeinheit ist dabei vorteilhafterweise die erste Schwenkringkomponente und die zweite Aufnahmeeinheit ist vorteilhafterweise die zweite Schwenkringkomponente. Die zwei ersten Punkte der ersten Schwenkringkomponente und die zwei zweiten Punkte der zweiten Schwenkringkomponente werden vorteilhafterweise durch die jeweilige Federeinheit gebildet.

Bevorzugterweise ist das zweite Drehlager mit dem ersten Aufnahmeelement und dem zweiten Aufnahmeelement verbunden. Insbesondere kann das Drehlager zwischen dem ersten Aufnahmeelement und dem zweiten Aufnahmeelement, vorzugsweise spielfrei, aufgenommen sein. Beispielsweise kann das Drehlager vermittels seines Außenrings mit dem ersten Aufnahmeelement und dem zweiten Aufnahmeelement verbunden sein.

Es ist weiterhin bevorzugt, dass der Schwenkring ein Stützelement mit zentraler Ausnehmung umfasst, wobei das Stützelement derart ausgebildet ist, die Federeinheit, insbesondere die Federeinheit einer der Aufnahmeeinheiten, aufzunehmen.

Das ringförmige Element der ersten Aufnahmeeinheit kann vorteilhafterweise in Tangentialrichtung verlaufende Anformungen zur Aufnahme der zugehörigen Federeinheit aufweisen. Die Anformungen sind insbesondere einstückig mit der ersten Aufnahmeeinheit ausgebildet.

Weiterhin kann das ringförmige Element der zweiten Aufnahmeeinheit vorteilhafterweise in Radialrichtung verlaufende Anformungen zur Aufnahme der zugehörigen Federeinheit aufweisen. Die Anformungen sind insbesondere einstückig mit der zweiten Aufnahmeeinheit ausgebildet.

Die Federeinheit kann in einer besonderen Ausführung ein oder mehrere Elastomerkissen umfassen.

Die erste Schwenkringkomponente und/oder die zweite Schwenkringkomponente, insbesondere das hülsenförmige Element und/oder das erste Aufnahmeelement und/oder das zweite Aufnahmeelement und/oder das Stützelement, können bzw. kann gemäß einer weiteren vorteilhaften Ausgestaltung eine Verdrehsicherung aufweisen. Die Verdrehsicherung stellt vorteilhafterweise sicher, dass die räumliche Lage der Schwenkachse unveränderlich bleibt. Dadurch bleibt auch, insbesondere bei möglicherweise entstehenden Vibrationen, während des bestimmungsgemäßen Betriebs die Schwenkachse konstant. Ein sicherer Betrieb ist somit gewährleistet.

Zur Lösung der eingangs genannten Aufgabe wird zudem eine elektromechanische Servolenkung mit einem Antriebsmodul vorgeschlagen, welches einen Antriebsmotor, ein Gehäuse, ein Schneckengetriebe und eine Lageranordnung umfasst. Das Schneckengetriebe umfasst dabei eine Schneckenwelle mit einer Schneckenwellendrehachse und ein Schneckenrad mit einer Schneckenraddrehachse. Insbesondere ist vorgesehen, dass die Schneckenwelle von dem Antriebsmotor angetrieben wird. Die Schneckenwelle ist dabei in der Lageranordnung gelagert, wobei die Lageranordnung gemäß einer erfindungsgemäßen Ausgestaltung ausgebildet ist. Insbesondere ist vorgesehen, dass die elektromechanische Servolenkung ein Steer-by-Wire-Lenksystem ist.

Weiter vorteilhafte Einzelheiten, Merkmale und Ausgestaltungsdetails der Erfindung werden im Zusammenhang mit den in den Figuren dargestellten Ausführungsbeispielen näher erläutert.

Vorteilhafte Ausführungsformen der Erfindung sind im Folgenden anhand der Zeichnung näher erläutert. Darin zeigen im Einzelnen
- Figur 1: ein Ausführungsbeispiel für eine erfindungsgemäß ausgebildete elektromechanische Servolenkung in einer schematischen, perspektivischen Darstellung,
- Figur 2: ein Antriebsmodul für eine erfindungsgemäß ausgebildete elektromechanische Servolenkung in einer schematischen, perspektivischen Darstellung,
- Figur 3: ein abstraktes Ausführungsbeispiel für eine erfindungsgemäß ausgebildete Lageranordnung in einem stark vereinfachten Schaubild,
- Figur 4a-d: zeigt eine erste Ausführungsform für eine erfindungsgemäß ausgebildete Lageranordnung in verschiedenen Darstellungen,
- Figur 5a-d: zeigt eine zweite Ausführungsform für eine erfindungsgemäß ausgebildete Lageranordnung in verschiedenen Darstellungen und
- Figur 6a-e: zeigt eine dritte Ausführungsform für eine erfindungsgemäß ausgebildete Lageranordnung in verschiedenen Darstellungen.

### Ausführungsform der Erfindung

In den verschiedenen Figuren sind gleiche Teile stets mit den gleichen Bezugszeichen versehen und sind daher in der Regel jeweils nur einmal benannt bzw. erwähnt.

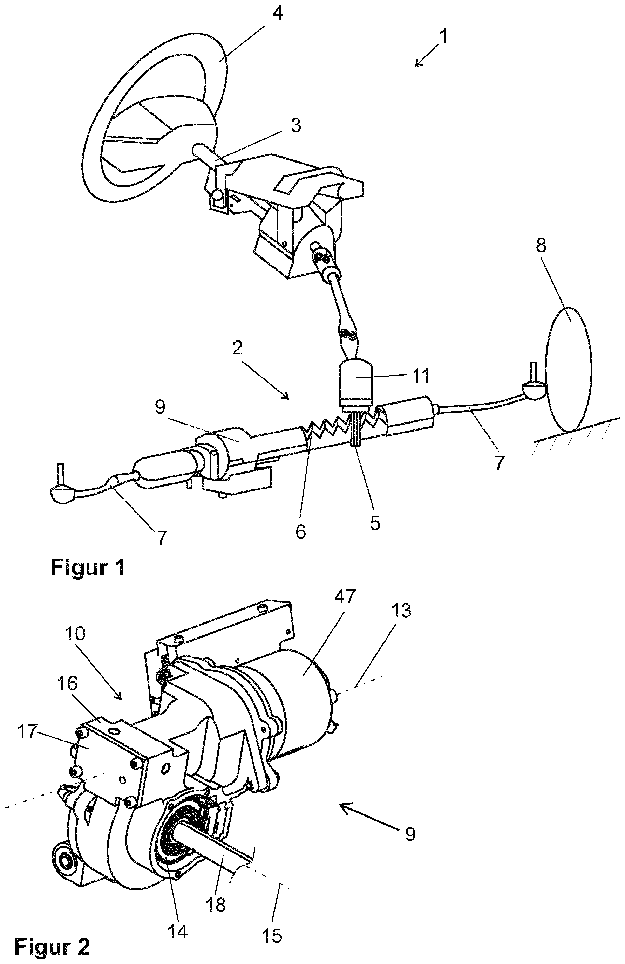

Figur 1 zeigt eine elektromechanische Servolenkung in einer schematischen, perspektivischen Darstellung.

Die elektromechanische Servolenkung umfasst eine Lenksäule 1 und ein Lenkgetriebe 2. Die Lenksäule 1 umfasst eine Lenkspindel 3, an deren dem Fahrer zugewandten Ende ein Lenkrad 4 befestigt ist. Das Lenkrad 4 kann auch als Lenkhandhabe bezeichnet werden. Das Lenkgetriebe 2 umfasst ein Lenkritzel 5, eine Lenkzahnstange 6 und zwei Lenkspurstangen 7. Das Lenkritzel 5 und die Lenkzahnstange 6 stehen im Eingriff miteinander. Das Lenkgetriebe 2 dient der Übersetzung von Lenkbefehlen, die durch Drehungen des Lenkrads 4 erzeugbar sind, in entsprechende Drehungen von gelenkten Fahrzeugrädern 8.

Das Lenkritzel 5 ist in bekannter Weise durch eine kinematische Verbindung mit der Lenkzahnstange 6, der jeweiligen Lenkspurstange 7 und dem jeweiligen gelenkten Fahrzeugrad 8 mechanisch gekoppelt. Somit kann der Lenkbefehl von dem Lenkrad 4 hin zu den jeweiligen gelenkten Fahrzeugrädern 8 übertragen werden, nämlich von der Lenkspindel 3 hin zu dem Lenkgetriebe 2 durch mechanische Kopplung und innerhalb des Lenkgetriebes 2 ebenfalls durch mechanische Kopplung. Das Lenkritzel 5 wird dabei zur Lenkunterstützung von dem Antriebsmodul 11 angetrieben.

Die elektromechanische Servolenkung kann alternativ als ein in den Figuren nicht dargestelltes Steer-by-Wire Lenksystem ausgebildet sein, sodass der Lenkbefehl von dem Lenkrad 4 hin zu den jeweiligen gelenkten Fahrzeugrädern 8 übertragen wird, nämlich von der Lenkspindel 3 hin zu dem Lenkgetriebe 2 durch elektrische Kopplung und innerhalb des Lenkgetriebes 2 durch mechanische Kopplung. Die elektrische Kopplung kann in Form einer Datenübertragungseinrichtung, beispielsweise einem Datenkabel, ausgebildet sein.

Zur Lenkkraftunterstützung sind in der elektromechanischen Servolenkung in diesem Ausführungsbeispiel ein Antriebsmodul 9 und das Antriebsmodul 11 gezeigt. Das Antriebsmodul 9 und das Antriebsmodul 11 umfassen dabei jeweils - in Figur 1 nicht explizit dargestellt - einen Antriebsmotor, ein Gehäuse, ein Schneckengetriebe mit einer Schneckenwelle und einem Schneckenrad, wobei die Schneckenwelle in einer Lageranordnung gelagert ist.

Allgemein kann bei einer elektromechanischen Servolenkung ein Antriebsmodul an der Lenksäule 1 angebracht sein oder einen am Lenkritzel 5 mit der Lenkwelle 10 gekoppelten Hilfskraftantrieb 31 aufweisen. Die Antriebsmodule 9,11 können dabei gleichartig aufgebaut sein. Durch das Antriebsmodul 9,11 kann ein Hilfsdrehmoment in die Lenkspindel 3 und/oder das Lenkritzel 5 eingekoppelt werden, um den Fahrer bei der Lenkarbeit zu unterstützten.

Insbesondere ist aber vorgesehen, dass die elektromechanische Servolenkung nur ein Antriebsmodul 9 oder ein Antriebsmodul 11 aufweist, insbesondere an einer der in Figur 1 gezeigten Positionen.

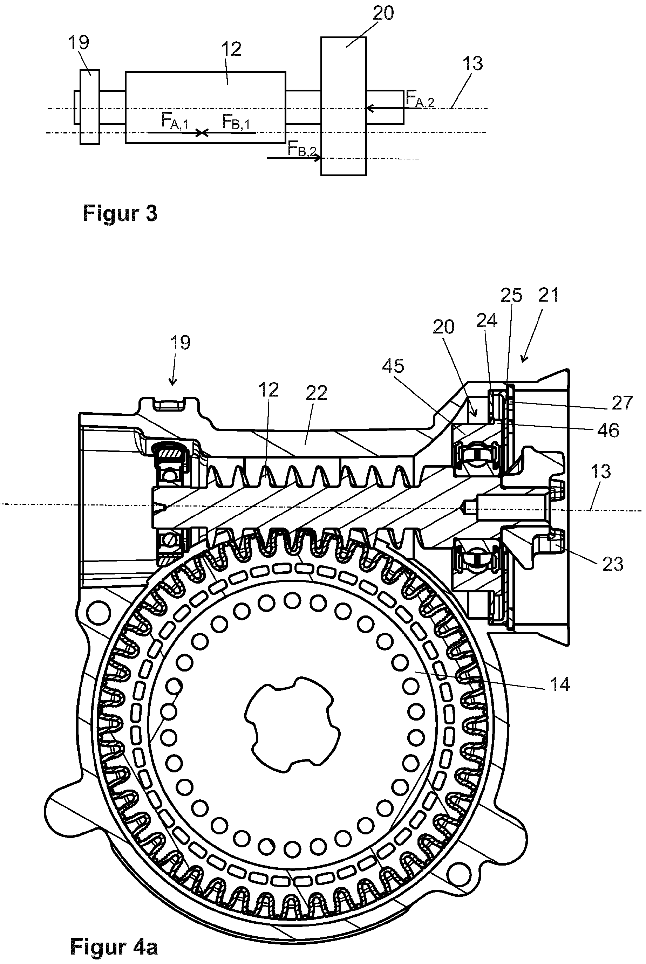

Ein Ausführungsbeispiel für ein Antriebsmodul 9 wird dabei unter Bezugnahme auf Figur 2 näher erläutert. Die Lageranordnung des Antriebsmoduls 9 kann insbesondere, wie unter Bezugnahme auf die Ausführungsbeispiele gemäß Figur 3 bis Figur 6e erläutert, ausgebildet sein. Das Antriebsmodul 11 kann entsprechend aufgebaut sein.

Figur 2 zeigt ein Ausführungsbeispiel für ein Antriebsmodul 9,11 für eine elektromechanische Servolenkung in einer schematischen, perspektivischen Darstellung, umfassend ein Schneckengetriebe 10 und einen Antriebsmotor 11.

Das Schneckengetriebe 10 umfasst eine in Figur 2 nicht dargestellte Schneckenwelle 12 mit einer Schneckenwellendrehachse 13 und ein Schneckenrad 14 mit einer Schneckenraddrehachse 15. Die Schneckenwellendrehachse 13 ist die Längsachse der Schneckenwelle 12. Die Schneckenwelle 12, auch als Schnecke bezeichnet, ist durch ein Gehäuseelement 16 und einen Gehäusedeckel 17 des Schneckengetriebes 10 zum Schutz vor Schmutz und Fremdkörpern umgeben. Die Schneckenwelle 12 wird von einer in Figur 2 nicht dargestellten Lageranordnung gelagert, wobei die Lageranordnung insbesondere, wie unter Bezugnahme auf Figur 4a bis Figur 6e erläutert, ausgebildet sein kann.

Der Antriebsmotor 11 treibt die Schneckenwelle 12 an, die drehbar um die Schneckenwellendrehachse 13 gelagert ist. Die Schneckenwelle 12 steht mit dem Schneckenrad 14 im Eingriff. Wenn sich die Schneckenwelle 12 dreht, dreht sich daher das Schneckenrad 14 um die Schneckenraddrehachse 15. Eine Abtriebswelle 18 ist drehfest mit dem Schneckenrad 14 verbunden und dreht gemeinsam mit dem Schneckenrad 14 um die Schneckenraddrehachse 15.

Figur 3 zeigt ein Ausführungsbeispiel für eine Lageranordnung in einem stark vereinfachten Schaubild.

Die Lageranordnung umfasst die Schneckenwelle 12, die drehbar um die Schneckenwellendrehachse 13 gelagert ist. Die Schneckenwelle 12 ist an ihrem ersten, axialen Ende durch ein erstes Drehlager 19 gelagert und an ihrem zweiten, axialen Ende durch ein zweites Drehlager 20 gelagert. Das erste Drehlager 19 ist derart ausgebildet, eine definierte Verschwenkbewegung der Schneckenwelle 12 zuzulassen. Das zweite Drehlager 20 ist als Schwenkdrehlager ausgebildet, indem das zweite Drehlager 20 innerhalb eines in Figur 3 nicht dargestellten Schwenkrings angeordnet ist.

Der besseren Übersicht halber sind zwei gesonderte Lastfälle gemeinsam in Figur 3 dargestellt, nämlich Lastfall A und Lastfall B. Die Lastfälle unterscheiden sich voneinander durch einander entgegengesetzte Drehrichtungen der Schneckenwelle 12.

Im Lastfall A wirkt eine Zahnkraft F_{A,1} im Punkt des Eingriffs zwischen der Schneckenwelle 12 und des in Figur 3 nicht dargestellten Schneckenrads 14 in Richtung des zweiten Drehlagers 20. Die Zahnkraft F_{A,1} bewirkt eine Lagerreaktionskraft F_{A,2}. Daraus ergibt sich ein Reaktionsmoment, das die Schneckenwelle 12 in Richtung des Schneckenrads 14 drückt bzw. verschwenkt.

Im Lastfall B wirkt eine Zahnkraft F_{B,1} im Punkt des Eingriffs zwischen der Schneckenwelle 12 und des Schneckenrads 14 in Richtung des ersten Drehlagers 19. Die Zahnkraft F_{B,1} bewirkt eine Lagerreaktionskraft F_{B,2}. Daraus ergibt sich ebenfalls ein Reaktionsmoment, das die Schneckenwelle 12 in Richtung des Schneckenrads 14 drückt bzw. verschwenkt.

Figur 4a zeigt eine erste Ausführungsform einer erfindungsgemäß ausgebildeten Lageranordnung in einer Schnittdarstellung mit Ausbruch.

Die Lageranordnung ist als eine Fest-Los-Lagerung ausgestaltet und umfasst ein erstes, das Loslager bildende Drehlager 19, ein zweites, das Festlager bildende Drehlager 20 und einen Schwenkring 21. Die beiden Drehlager 19, 20 sind jeweils als Wälzkugellager ausgebildet. Das erste Drehlager 19 ist an dessen Außenring 45 in Richtung der Schneckenwellendrehachse 13 fixiert und an dessen Innenring in Richtung der Schneckenwellendrehachse 13 frei von Fixierungen, sodass das erste Drehlager 19 keine in Richtung der Schneckenwellendrehachse 13 wirkenden Kräfte aufnehmen kann, sondern ausschließlich Radialkräfte aufnehmen kann. Das erste Drehlager 19 ist derart ausgebildet, eine definierte Verschwenkbewegung der Schneckenwelle 12 zuzulassen.

Die Lageranordnung dient zur Lagerung der mit dem Schneckenrad 14 kämmenden Schneckenwelle 12 in einem Gehäuse 22 einer elektromechanischen Servolenkung. Der Schwenkring 21 ist derart ausgebildet, das zweite Drehlager 20 formschlüssig aufzunehmen. Im Konkreten ist das zweite Drehlager 20 an dessen Außenring 45 in Richtung der Schneckenwellendrehachse 13 durch den Schwenkring 21 aufgenommen, indem eine in dem Außenring 45 des zweiten Drehlagers 20 einstückig ausgebildete Schulter 46 von dem Schwenkring 21 formschlüssig aufgenommen ist. Der Innenring des zweiten Drehlagers 20 ist in Richtung der Schneckenwellendrehachse 13 fixiert, indem der Innenring durch ein auf das Ende der Schneckenwelle 12 aufschraubbares Sicherungselement 23 gegen eine in der Schneckenwelle 12 ausgebildete Schulter gepresst ist. Das zweite Drehlager 20 kann in Richtung der Schneckenwellendrehachse 13 wirkende Kräfte und Radialkräfte aufnehmen.

Der Schwenkring 21 umfasst als eine erste Schwenkringkomponente einen geschlitzten Ring 24 und als eine zweite Schwenkringkomponente ein hülsenförmiges Element 25, wobei das hülsenförmige Element 25 eine zentrale Ausnehmung aufweist.

Das hülsenförmige Element 25 umfasst einen scheibenförmigen Abschnitt mit zentraler Ausnehmung und einen mit dem scheibenförmigen Abschnitt an dessen radial äußeren Rand verbundenen, sich in Richtung der Schneckenwellendrehachse 13 erstreckenden Wandungsabschnitt. Der Wandungsabschnitt ist als aufgestellter Rand ausgebildet. Der scheibenförmige Abschnitt und der Wandungsabschnitt weisen in etwa dieselbe Wandungsdicke auf.

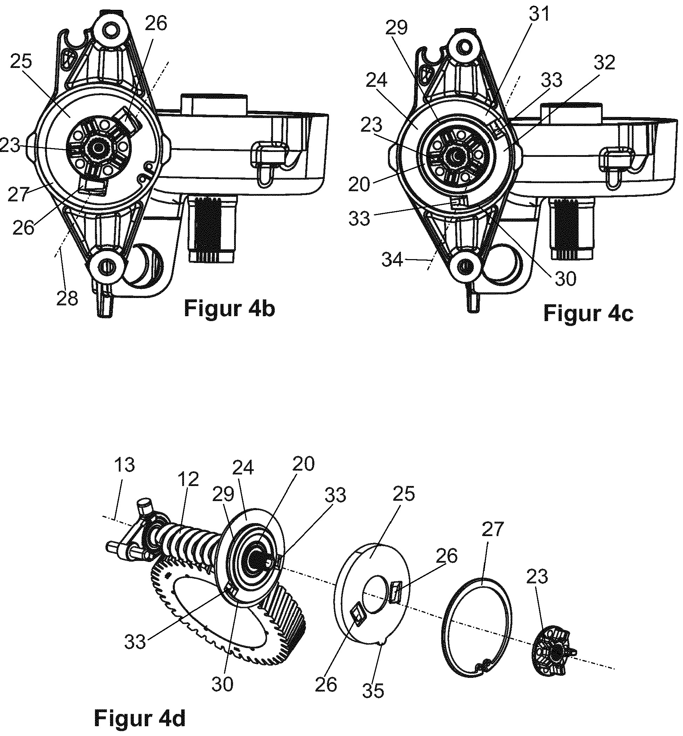

Figur 4b zeigt die Lageranordnung aus Figur 4a in einer Seitenansicht.

In dem scheibenförmigen Abschnitt des hülsenförmigen Elements 25 sind Zungen 26 als zwei zweite Punkte ausgebildet, wobei die Zungen 26 sich jeweils in Richtung der Schneckenwellendrehachse 13 erstrecken. Der geschlitzte Ring 24 und das hülsenförmige Element 25 sind in Richtung der Schneckenwellendrehachse 13 zueinander unmittelbar angrenzend bzw. direkt anliegend angeordnet.

Der Schwenkring 21 ist derart ausgebildet, federnd zwischen dem zweiten Drehlager 20 und dem Gehäuse 22 zu wirken. Zu diesem Zweck stützt sich das hülsenförmige Element 25 des Schwenkrings 21 auf dem dem zweiten Drehlager 20 abgewandten axialen Ende der Schneckenwelle 12 an einem als Sprengring bzw. Bohrungssicherungsring ausgebildeten Sicherungsring 27 in Richtung der Schneckenwellendrehachse 13 ab. Der Sicherungsring 27 ist formschlüssig in der Öffnung des Gehäuses 22 eingelassen bzw. fixiert.

Der Schwenkring 21 ist derart ausgebildet, eine Schwenkachse zu bilden. Die Schneckenwelle 12 ist durch die Lageranordnung um die Schwenkachse hin zu dem Schneckenrad 14 verschwenkbar. Die Position bzw. räumliche Lage bzw. Orientierung der Schwenkachse ist abhängig von der Drehrichtung der Schneckenwelle 12, das heißt von der Lastrichtung, und von dem Betrag des Lastmoments. Die Drehrichtungsabhängigkeit der Position der Schwenkachse ist folgendermaßen verwirklicht.

In dem einen Lastfall, das heißt während der einen Drehrichtung der Schneckenwelle 12, wird durch die Geometrie der im Eingriff befindlichen Zähne der Schneckenwelle 12 und des Schneckenrads 14 das zweite Drehlager 20 gegen das hülsenförmige Element 25 gedrückt, wobei das hülsenförmige Element 25 eine dessen geometrischer Ausgestaltung entsprechende Federwirkung aufweist, die wiederum ein Reaktionsmoment bewirkt, das die Schneckenwelle 12 in Richtung des Schneckenrads 14 drückt bzw. verschwenkt. Dieser Lastfall entspricht Lastfall A gemäß Figur 3.

In dem anderen Lastfall, das heißt während der anderen Drehrichtung der Schneckenwelle 12, wird durch die Geometrie der im Eingriff befindlichen Zähne der Schneckenwelle 12 und des Schneckenrads 14 das zweite Drehlager 20 in Axialrichtung der Schneckenwelle 12 gegen den geschlitzten Ring 24 gedrückt, wobei der geschlitzte Ring 24 eine dessen geometrischer Ausgestaltung entsprechende Federwirkung aufweist, die wiederum ein Reaktionsmoment bewirkt, das die Schneckenwelle 12 in Richtung des Schneckenrads 14 drückt bzw. verschwenkt. Dieser Lastfall entspricht Lastfall B gemäß Figur 3.

Die Lastabhängigkeit, das heißt die Abhängigkeit von dem Betrag des Lastmoments, des hülsenförmigen Elements 25 ist verwirklicht durch die Elastizität bzw. Nachgiebigkeit der Zungen 26. Je größer der Betrag des Lastmoments ist desto stärker ist die elastische Verformung der Zungen 26 und desto größer ist die durch die Zungen 26 bewirkte rückstellende Federkraft.

Die Verschwenkung der Schneckenwelle 12 dient dazu, das Getriebespiel zwischen der Schneckenwelle 12 und dem Schneckenrad 14 zu verringern. Die Schwenkachse verläuft orthogonal zum Radialvektor des Schneckenrads 14.

Die Zungen 26 des hülsenförmigen Elements 25 sind derart positioniert, dass die die Zungen 26 verbindende Achse 28, auch als Auflagepunktachse oder als zweite Achse bezeichnet, von einer durch die Schneckenwellendrehachse 13 hindurchführenden Achse abweichend ist, das heißt außermittig verläuft, das heißt nicht durch den Mittelpunkt des Schneckenrads 14 hindurch verläuft, das heißt nicht durch die Schneckenwellendrehachse 13 hindurch verläuft. Die Zungen 26 sind einander in Umfangsrichtung entgegengesetzt orientiert.

Der Schwenkring 21 ist derart ausgebildet, dass die Schwenkachse durch gefederte Auflagepunkte, die insbesondere den zwei ersten Punkten der ersten Schwenkringkomponente und den zwei zweiten Punkten der zweiten Schwenkringkomponente entsprechen, gebildet ist. Die Lage der Schwenkachse ändert sich dadurch lastabhängig. Die gefederten Auflagepunkte sind durch die Zungen 26 des hülsenförmigen Elements 25 gebildet. Die Zungen 26 bilden einen punktförmigen Auflagekontakt zwischen dem hülsenförmigen Element 25 und dem zweiten Drehlager 20. Die Zungen 26 sind elastisch verformbar und weisen somit eine Federwirkung in Richtung der Schneckenwellendrehachse 13 auf. Die punktförmigen Auflagekontakte verschieben sich in Abhängigkeit von der in Richtung der Schneckenwellendrehachse 13 wirkenden Kräfte, das heißt von den Axialkräften. Jede Zunge 26 bildet einen Auflagepunkt. Somit bilden die zwei Zungen 26 die Auflagepunktachse 28, also insbesondere die von den zwei zweiten Punkten gebildete zweite Achse.

Figur 4c zeigt die Lageranordnung aus Figur 4a in einer weiteren Seitenansicht. Im Vergleich zur Seitenansicht gemäß Figur 4b sind der besseren Übersicht halber der Sicherungsring 27 und das hülsenförmige Element 25 nicht dargestellt, sodass die Sicht auf den geschlitzten Ring 24, also die erste Schwenkringkomponente, frei ist.

In dem geschlitzten Ring 24 sind ein erster kreisbogenförmiger, radial innerer Schlitz 29 und ein zweiter, kreisbogenförmiger, radial äußerer Schlitz 30 ausgebildet. Der erste Schlitz 29 und der zweite Schlitz 30 überlagern sich in Umfangsrichtung teilweise, sodass ein erster Teilkreisring 31 und ein zweiter Teilkreisring 32 entstehen. Der erste Teilkreisring 31 und der zweite Teilkreisring 32 sind durch zwei Stege 33 verbunden. Die Stege 33 sind dabei insbesondere die zwei ersten Punkte der ersten Schwenkringkomponente. Die zwei Stege 33 bilden jeweils eine Materialverjüngung zwischen dem ersten Teilkreisring 31 und dem zweiten Teilkreisring 32, sodass der erste Teilkreisring 31 und der zweite Teilkreisring 32 um eine die beiden Stege 33 verbindende Achse 34, auch als Verjüngungspunktachse 34 oder als erste Achse bezeichnet, verschwenkbar ist. Der maximal mögliche Hub wird für das hülsenförmige Element 25 durch den Abstand zur Schulter 46 bestimmt, für den geschlitzten Ring 24 durch den Abstand zwischen der Auflage im Gehäuse 22 und dem zweiten Teilkreisring 32 des Ringes 24.

Die Lastabhängigkeit des geschlitzten Rings 24 ist verwirklicht durch die Elastizität bzw. Nachgiebigkeit der Stege 33 und somit insbesondere durch die zwei ersten Punkte der ersten Schwenkringkomponente. Je größer der Betrag des Lastmoments ist desto stärker ist die elastische Verformung der Stege 33 und desto größer ist die durch die Stege 33 bewirkte rückstellende Federkraft.

Der Verlauf bzw. die räumliche Lage bzw. die Orientierung der Schwenkachse ist abhängig von den jeweiligen Verläufen bzw. räumlichen Lagen bzw. Orientierungen der Auflagepunktachse 28 und der Verjüngungspunktachse 34, und somit insbesondere von der durch die zwei zweiten Punkte der zweiten Schwenkringkomponente gebildeten zweiten Achse und der durch die zwei ersten Punkte der ersten Schwenkringkomponente gebildeten ersten Achse.

Im Fall ohne Last, das heißt wenn die Schneckenwelle 12 sich nicht dreht, verläuft die Schwenkachse des Schwenkrings 21 parallel zu der Auflagepunktachse 28 und der Verjüngungspunktachse 34 sowie mittig zwischen der Auflagepunktachse 28 und der Verjüngungspunktachse 34.

Im Fall mit Last, das heißt wenn die Schneckenwelle 12 sich dreht, verläuft die Schwenkachse des Schwenkrings 21 ebenfalls parallel zu der Auflagepunktachse 28 und der Verjüngungspunktachse 34. Allerdings verläuft die Schwenkachse dann nicht mittig zwischen der zweiten Achse 28 und der ersten Achse 34, sondern abhängig von der Drehrichtung der Schneckenwelle 12 und von dem Betrag des zu überwindenden Lastmoments näher zu der durch die beiden Zungen 26 gebildeten Auflagepunktachse 28, also der zweiten Achse 28, oder näher zu der durch die beiden Stege 33 gebildeten Verjüngungspunktachse 34, also der ersten Achse 34. Im Konkreten verläuft die Schwenkachse näher zu der Auflagepunktachse 28, das heißt entfernter von der Verjüngungspunktachse 34, wenn die Zahnkräfte in Richtung des hülsenförmigen Elements 25 gerichtet sind. Dies entspricht Lastfall A gemäß Figur 3. Demgegenüber verläuft die Schwenkachse näher zu der Verjüngungspunktachse 34, das heißt entfernter von der Auflagepunktachse 28, wenn die Zahnkräfte in Richtung geschlitzter Ring 24 gerichtet sind. Dies entspricht Lastfall B gemäß Figur 3.

Figur 4d zeigt die Lageranordnung aus Figur 4a in einer entlang der Schneckenwellendrehachse 13 auseinandergezogenen Darstellung.

Das hülsenförmige Element 25 umfasst eine Verdrehsicherung 35. Die Verdrehsicherung 35 gewährleistet, dass sich das hülsenförmige Element 25 im Laufe der Zeit während des Betriebs nicht relativ zu den anderen Bauelementen verdreht. Dies stellt sicher, dass die Schwenkachse ihre vorgesehene räumliche Lage beibehält. Die Verdrehsicherung 35 ist als eine sich in Radialrichtung erstreckende Anformung ausgebildet. Die Verdrehsicherung 35 ist einstückig mit dem hülsenförmigen Element 25 ausgebildet. Alternativ kann die Verdrehsicherung 35 auch als gesondertes Bauteil ausgebildet sein, das mit dem hülsenförmigen Element 25 verbindbar ist.

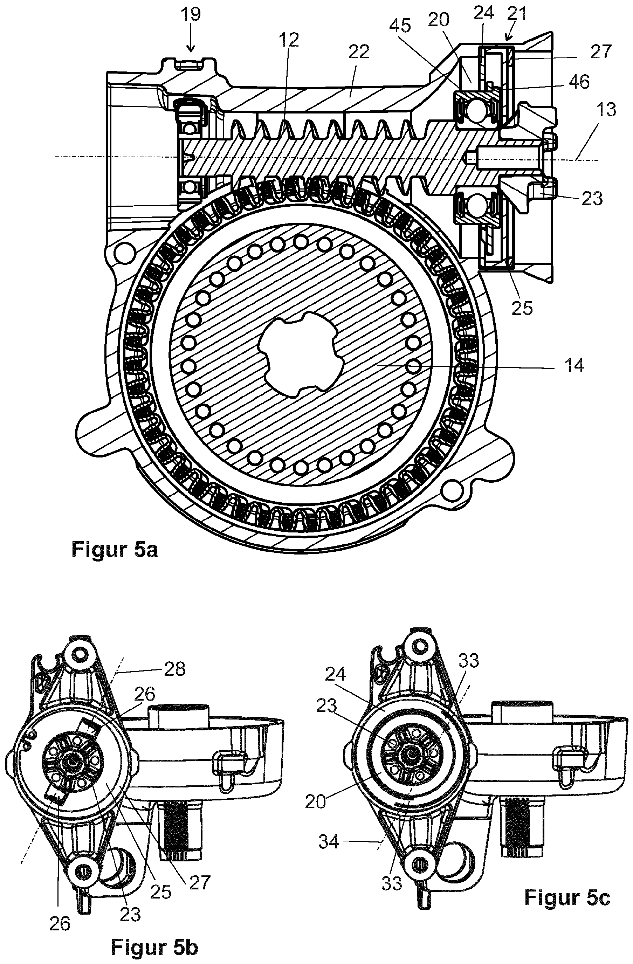

Figur 5a zeigt eine zweite Ausführungsform für eine erfindungsgemäß ausgebildete Lageranordnung in einer Schnittdarstellung. Diese zweite Ausführungsform ist grundsätzlich analog zu der ersten Ausführungsform gemäß Figuren 4a-d aufgebaut. Zur Vermeidung von Wiederholungen gelten daher an dieser Stelle mit der ersten Ausführungsform übereinstimmende Bestandteile und Bauelemente als entsprechend beschrieben.

Figur 5b zeigt die Lageranordnung aus Figur 5a in einer Seitenansicht.

Die Zungen 26, also insbesondere die zwei zweiten Punkte, des hülsenförmigen Elements 25, also insbesondere der zweiten Schwenkringkomponente, sind derart positioniert, dass die die beiden Zungen 26 verbindende Auflagepunktachse 28, also insbesondere die durch die zwei zweiten Punkte gebildete zweite Achse 28, eine durch die Schneckenwellendrehachse 13 hindurchführenden Achse ist, das heißt mittig verläuft, das heißt durch den Mittelpunkt des Schneckenrads 14 hindurch verläuft, das heißt durch die Schneckenwellendrehachse 13 hindurch verläuft.

Figur 5c zeigt die Lageranordnung aus Figur 5a in einer weiteren Seitenansicht. Im Vergleich zur Seitenansicht gemäß Figur 5b sind der besseren Übersicht halber der Sicherungsring 27 und das hülsenförmige Element 25 nicht dargestellt, sodass die Sicht auf den geschlitzten Ring 24, also insbesondere die erste Schwenkringkomponente, frei ist.

In dem geschlitzten Ring 24 sind, analog zu dem geschlitzten Ring der ersten Ausführungsform, zwei Stege 33 ausgebildet, also insbesondere zwei erste Punkte der ersten Schwenkringkomponente. Die zwei Stege 33 bilden jeweils eine Materialverjüngung zwischen dem ersten Teilkreisring 31 und dem zweiten Teilkreisring 32, sodass der erste Teilkreisring 31 und der zweite Teilkreisring 32 um die die Stege 33 verbindende Verjüngungspunktachse 34, also insbesondere um die von den zwei ersten Punkten gebildete erste Achse 34, verschwenkbar ist.

Dadurch, dass die durch die beiden Zungen 26 gebildete Auflagepunktachse 28, also insbesondere die zweite Achse 28, mittig verläuft und dass die Schwenkachse des Schwenkrings 21 abhängig von der Auflagepunktachse 28, also insbesondere von der zweiten Achse 28, und der Verjüngungspunktachse 34, also insbesondere der ersten Achse 34, ist, verläuft die Schwenkachse des Schwenkrings 21 der zweiten Ausführungsform anders als die Schwenkachse des Schwenkrings 21 der ersten Ausführungsform gemäß Figuren 4a-d.

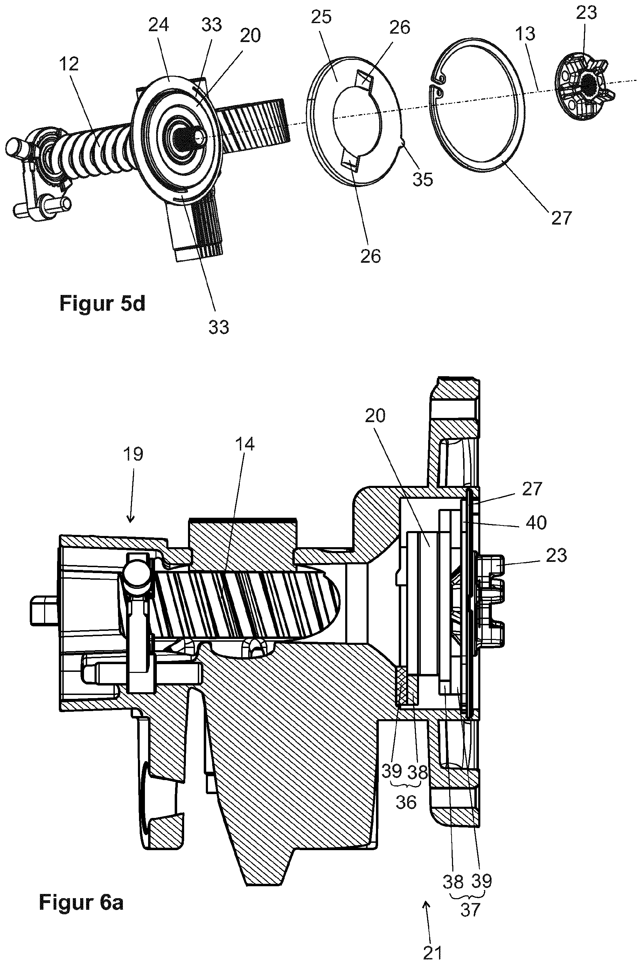

Figur 5d zeigt die Lageranordnung aus Figur 5a in einer entlang der Schneckenwellendrehachse 13 auseinandergezogenen Darstellung.

Figur 6a zeigt eine dritte Ausführungsform der erfindungsgemäßen Lageranordnung in einer Schnittdarstellung mit Ausbruch. Der besseren Übersicht halber ist die Schneckenwelle 13 nicht dargestellt.

Die dritte Ausführungsform der erfindungsgemäßen Lageranordnung ist grundsätzlich ähnlich zu der ersten und zweiten Ausführungsform gemäß Figuren 4a-d bzw. 5a-d aufgebaut. Zur Vermeidung von Wiederholungen gelten daher an dieser Stelle mit der ersten und zweiten Ausführungsform übereinstimmende Bestandteile und Bauelemente als entsprechend beschrieben.

Im Gegensatz zu den ersten beiden Ausführungsformen umfasst der Schwenkring 21 gemäß dritter Ausführungsform als erste Schwenkringkomponente eine erste Aufnahmeeinheit 36 mit zentraler Ausnehmung und als zweite Schwenkringkomponente eine zweite Aufnahmeeinheit 37 mit zentraler Ausnehmung. Die erste Aufnahmeeinheit 36 und die zweite Aufnahmeeinheit 37 umfassen jeweils ein ringförmiges Element 38 und eine Federeinheit 39 zur in Axialrichtung, das heißt in Richtung der Schneckenwellendrehachse 13, wirkenden Federung. Die Federeinheiten 39 umfassen jeweils zwei gesonderte Elastomerkissen. Die Elastomerkissen bilden dabei insbesondere jeweils die zwei ersten Punkte der ersten Schwenkringkomponente und die zwei zweiten Punkte der zweiten Schwenkringkomponente.

Das zweite Drehlager 20 ist mit der ersten Aufnahmeeinheit 36 und der zweiten Aufnahmeeinheit 37 verbunden, indem der Außenring des zweiten Drehlagers 20 an beiden axialen Enden jeweils einen durch eine axial mittige Schulter zum axialen Anschlag begrenzten Absatz aufweist. Die beiden Absätze sind dazu ausgebildet, die erste Aufnahmeeinheit 36 und die zweite Aufnahmeeinheit 37 aufzunehmen.

Der Schwenkring 21 umfasst weiter ein Stützelement 40 mit zentraler Ausnehmung, wobei das Stützelement 40 derart ausgebildet ist, die Federeinheit 39 der zweiten Aufnahmeeinheit 37 aufzunehmen.

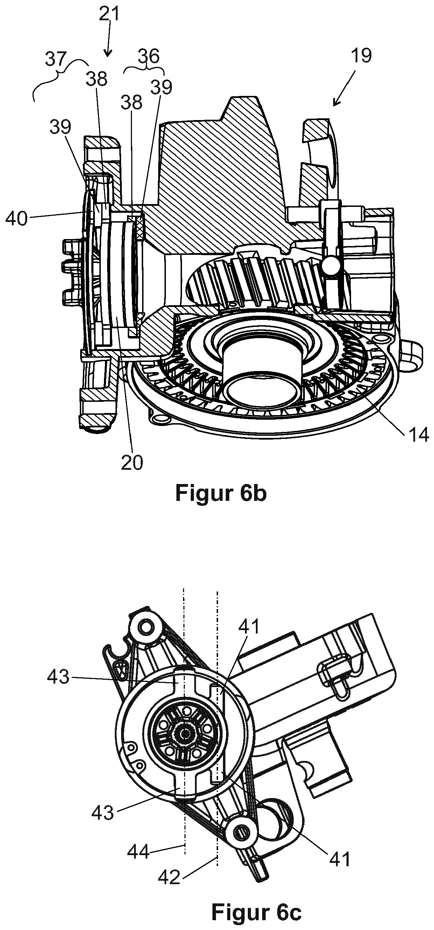

Figur 6b zeigt die Lageranordnung aus Figur 6a in einer geschnittenen, perspektivischen Darstellung mit Ausbruch, wobei zur besseren Übersicht die Schneckenwelle 13 nicht dargestellt ist.

Figur 6c zeigt die Lageranordnung aus Figur 6a in einer Seitenansicht.

Das ringförmige Element 38 der ersten Aufnahmeeinheit 36 weist in Tangentialrichtung verlaufende Anformungen 41 zur Aufnahme der zugehörigen Federeinheit 39 auf. Die Anformungen 41 des ringförmigen Elements 38 der ersten Aufnahmeeinheit 36 bilden eine erste Anformungspunktachse 42, die insbesondere der durch die zwei ersten Punkte der ersten Schwenkringkomponente gebildeten ersten Achse 42 entspricht.

Das ringförmige Element 38 der zweiten Aufnahmeeinheit 37 weist in Radialrichtung verlaufende Anformungen 43 zur Aufnahme der zugehörigen Federeinheit auf. Die Anformungen 43 des ringförmigen Elements 38 der zweiten Aufnahmeeinheit 37 bilden eine zweite Anformungspunktachse 44, die insbesondere der durch die zwei zweiten Punkte der zweiten Schwenkringkomponente gebildeten zweiten Achse 44 entspricht.

Der Verlauf bzw. die räumliche Lage bzw. die Orientierung der Schwenkachse des Schwenkrings 21 ist abhängig von den jeweiligen Verläufen bzw. räumlichen Lagen bzw. Orientierungen der ersten Anformungspunktachse 42 und der zweiten Anformungspunktachse 44, also insbesondere von der durch die zwei ersten Punkte der ersten Schwenkringkomponente gebildeten ersten Achse 42 und der durch die zwei zweiten Punkte der zweiten Schwenkringkomponente gebildeten zweiten Achse 44.

Im Fall ohne Last, das heißt wenn die Schneckenwelle 12 sich nicht dreht, verläuft die Schwenkachse parallel zu und mittig zwischen der ersten Achse 42 und der zweiten Achse 44, also insbesondere den Anformungspunktachsen 42, 44.

Im Fall mit Last, das heißt wenn die Schneckenwelle 12 sich dreht, verläuft die Schwenkachse des Schwenkrings 21 ebenfalls parallel zu der ersten und zweiten Anformungspunktachse 42, 44. Allerdings verläuft die Schwenkachse dann nicht mittig zwischen den beiden Achsen 42, 44, sondern abhängig von der Drehrichtung der Schneckenwelle 12 und von dem Betrag des zu überwindenden Lastmoments näher zu der durch die zweite Aufnahmeeinheit 37 gebildeten zweiten Anformungspunktachse 44 oder näher zu der durch die erste Aufnahmeeinheit 36 gebildeten ersten Anformungspunktachse 42. Im Konkreten verläuft die Schwenkachse näher zu der zweiten Anformungspunktachse 44, das heißt entfernter von der ersten Anformungspunktachse 42, wenn die Zahnkräfte in Richtung der zweiten Aufnahmeeinheit 37 gerichtet sind. Dies entspricht Lastfall A gemäß Figur 3. Demgegenüber verläuft die Schwenkachse näher zu der ersten Anformungspunktachse 42, das heißt entfernter von der zweiten Anformungspunktachse 44, wenn die Zahnkräfte in Richtung der ersten Aufnahmeeinheit 37 gerichtet sind. Dies entspricht Lastfall B gemäß Figur 3. Der exakte Verlauf der Schwenkachse ist abhängig von der geometrischen Ausgestaltung der jeweiligen Federeinheiten 39 und von den Eigenschaften des verwendeten Materials der jeweiligen Federeinheiten 39.

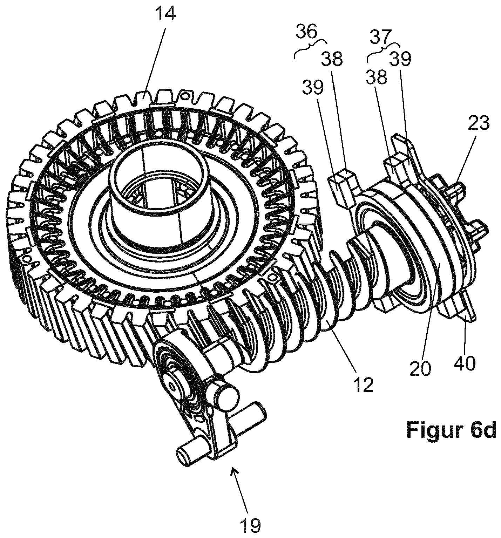

Figur 6d zeigt die Lageranordnung aus Figur 6a in einer perspektivischen Darstellung ohne Gehäuse.

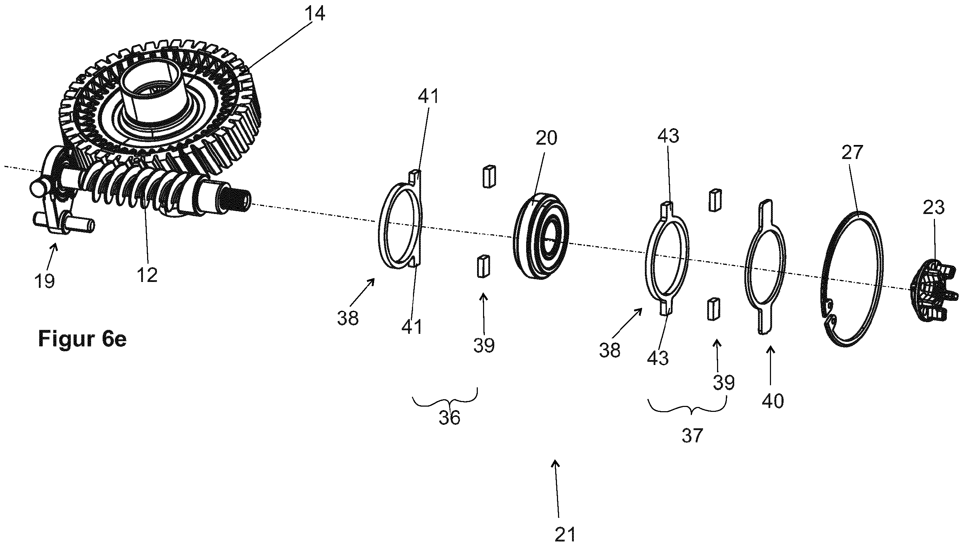

Figur 6e zeigt die Lageranordnung aus Figur 6a in einer entlang der Schneckenwellendrehachse 13 auseinandergezogenen Darstellung.

### Bezugszeichenliste

- 1: Lenksäule
- 2: Lenkgetriebe
- 3: Lenkspindel
- 4: Lenkrad
- 5: Lenkritzel
- 6: Lenkzahnstange
- 7: Lenkspurstange
- 8: Fahrzeugrad
- 9: Antriebsmodul
- 10: Schneckengetriebe
- 11: Antriebsmodul
- 12: Schneckenwelle
- 13: Schneckenwellendrehachse
- 14: Schneckenrad
- 15: Schneckenraddrehachse
- 16: Gehäuseelement
- 17: Gehäusedeckel
- 18: Abtriebswelle
- 19: Erstes Drehlager
- 20: Zweites Drehlager
- 21: Schwenkring
- 22: Gehäuse
- 23: Sicherungselement
- 24: Geschlitzten Ring
- 25: Hülsenförmiges Element
- 26: Zunge
- 27: Sicherungsring
- 28: Auflagepunktachse (zweite Achse)
- 29: Erster Schlitz
- 30: Zweiter Schlitz
- 31: Erster Teilkreisring
- 32: Zweiter Teilkreisring
- 33: Steg
- 34: Verjüngungspunktachse (erste Achse)
- 35: Verdrehsicherung
- 36: Erste Aufnahmeeinheit
- 37: Zweite Aufnahmeeinheit
- 38: Ringförmiges Element
- 39: Federeinheit
- 40: Stützelement
- 41: Anformung
- 42: Erste Anformungspunktachse (erste Achse)
- 43: Anformung
- 44: Zweite Anformungspunktachse (zweite Achse)
- 45: Außenring
- 46: Schulter
- 47: Elektromotor

- F_{A,1}: Zahnkraft
- F_{A,2}: Lagerreaktionskraft
- F_{B,1}: Zahnkraft
- F_{B,2}: Lagerreaktionskraft

## Patentansprüche

1. Lageranordnung zur Lagerung einer mit einem Schneckenrad (14) kämmenden Schneckenwelle (12) in einem Gehäuse (22) einer elektromechanischen Servolenkung, umfassend ein erstes Drehlager (19), ein zweites Drehlager (20) und einen Schwenkring (21), wobei das erste Drehlager (19) derart ausgebildet ist, eine Verschwenkbewegung der Schneckenwelle (12) zuzulassen, wobei der Schwenkring (21) eine erste Schwenkringkomponente (24, 36) und eine zweite Schwenkringkomponente (25, 37) umfasst und ausgebildet ist, federnd zwischen dem zweiten Drehlager (20) und dem Gehäuse (22) zu wirken, und wobei das zweite Drehlager (20) in dem Schwenkring (21) zumindest teilweise zwischen der ersten Schwenkringkomponente (24, 36) und der zweiten Schwenkringkomponente (25, 37) angeordnet ist, **dadurch gekennzeichnet, dass** die erste Schwenkringkomponente (24, 36) zwei erste Punkte (33, 39) aufweist, bezüglich derer die erste Schwenkringkomponente (24, 36) federnd ausgebildet ist, und die zweite Schwenkringkomponente (25, 37) zwei zweite Punkte (26, 39) aufweist, bezüglich derer die zweite Schwenkringkomponente (25, 37) federnd ausgebildet ist.

2. Lageranordnung nach Anspruch 1, **dadurch gekennzeichnet, dass** die ersten zwei Punkte (33, 39) eine erste Achse (34, 42) bilden und die zweiten zwei Punkte (26, 39) eine zweite Achse (28, 44) bilden, wobei die erste Achse (34, 42) und die zweite Achse (28, 44) nicht deckungsgleich sind.

3. Lagerandordnung nach Anspruch 1 oder Anspruch 2, **dadurch gekennzeichnet, dass** die zwei ersten Punkte (33, 39) und die zwei zweiten Punkte (26, 39) jeweils gefederte Auflagepunkte sind.

4. Lagerandordnung nach einem der Ansprüche 1 bis 3, **dadurch gekennzeichnet, dass** der Schwenkring (21) derart ausgebildet ist, eine Schwenkachse zu bilden, insbesondere derart, dass die Schwenkachse orthogonal zum Radialvektor des Schneckenrads (14) verläuft.

5. Lageranordnung nach einem der Ansprüche 1 bis 4, **dadurch gekennzeichnet, dass** der Schwenkring (21) derart ausgebildet ist, dass die Schwenkachse durch die zwei ersten Punkte (33, 39) und die zwei zweiten Punkte (26, 39) gebildet ist.

6. Lageranordnung nach einem der Ansprüche 1 bis 5, **dadurch gekennzeichnet, dass** der Schwenkring (21) über die zwei ersten Punkte (33, 39) und die zwei zweiten Punkte (26, 39) die Position der Schwenkachse abhängig von der Drehrichtung der Schneckenwelle (12) verändert.

7. Lageranordnung nach einem der Ansprüche 1 bis 6, **dadurch gekennzeichnet, dass** der Schwenkring (21) über die zwei ersten Punkte (33, 39) und die zwei zweiten Punkte (26, 39) die Position der Schwenkachse abhängig von dem Betrag des zu überwindenden Lastmoments verändert.

8. Lageranordnung nach einem der Ansprüche 1 bis 7, **dadurch gekennzeichnet, dass** das zweite Drehlager (20) einen Außenring (45) aufweist, wobei der Außenring (45) eine Schulter (46) oder einen Absatz ausbildet, an der die erste Schwenkringkomponente (24, 36) und/oder die zweite Schwenkringkomponente (25, 37) angeordnet ist, wobei insbesondere die Schulter (46) oder der Absatz für die erste Schwenkringkomponente (24, 36) und/oder die zweite Schwenkringkomponente (25, 37) als mechanischer Anschlag dient.

9. Lageranordnung nach einem der Ansprüche 1 bis 8, **dadurch gekennzeichnet, dass** das zweite Drehlager (20) einen Außenring (45) aufweist, wobei der Außenring (45) eine Schulter (46) ausbildet, wobei die Schulter (46) von dem Schwenkring (21) formschlüssig aufgenommen ist.

10. Lageranordnung nach einem der Ansprüche 1 bis 9, **dadurch gekennzeichnet, dass** der Schwenkring (21) einen geschlitzten Ring (24) als die erste Schwenkringkomponente und ein hülsenförmiges Element (25) als die zweite Schwenkringkomponente umfasst.

11. Lageranordnung nach Anspruch 10, **dadurch gekennzeichnet, dass** in dem geschlitzten Ring (24) ein erster kreisbogenförmiger, radial innerer Schlitz (29) und ein zweiter, kreisbogenförmiger, radial äußerer Schlitz (30) ausgebildet sind, wobei der erste Schlitz (29) und der zweite Schlitz (30) sich in Umfangsrichtung teilweise überlagern, sodass ein erster Teilkreisring (31) und ein zweiter Teilkreisring (32) entstehen, wobei der erste Teilkreisring (31) und der zweite Teilkreisring (32) durch zwei Stege (33) als die zwei ersten Punkte verbunden sind.

12. Lageranordnung nach Anspruch 10 oder Anspruch 11, **dadurch gekennzeichnet, dass** das hülsenförmige Element (25) einen scheibenförmigen Abschnitt mit zentraler Ausnehmung und einen mit dem scheibenförmigen Abschnitt an dessen radial äußerem Rand verbundenen, sich in Axialrichtung der Schneckenwelle (12) erstreckenden Wandungsabschnitt umfasst, wobei in dem scheibenförmigen Abschnitt Zungen (26) als die zwei zweiten Punkte ausgebildet sind, wobei die Zungen (26) sich jeweils in Axialrichtung der Schneckenwelle (12) erstrecken, wobei die Zungen (26) insbesondere derart positioniert sind, dass die die Zungen (26) verbindende Achse (28) eine durch die Längsachse der Schneckenwelle (12) hindurchführende Achse ist.

13. Lageranordnung nach einem der Ansprüche 1 bis 9, **dadurch gekennzeichnet, dass** der Schwenkring (21) eine erste Aufnahmeeinheit (36) mit zentraler Ausnehmung als die erste Schwenkringkomponente und eine zweite Aufnahmeeinheit (37) mit zentraler Ausnehmung als die zweite Schwenkringkomponente umfasst, wobei die erste Aufnahmeeinheit (36) und die zweite Aufnahmeeinheit (37) jeweils ein ringförmiges Element (38) und eine Federeinheit (39) zur in Axialrichtung wirkenden Federung umfassen, wobei die Federeinheit (39) jeweils die zwei ersten Punkte und die zwei zweiten Punkte bildet, und dass der Schwenkring (21) insbesondere ein Stützelement (40) mit zentraler Ausnehmung umfasst, wobei das Stützelement (40) derart ausgebildet ist, die Federeinheit (39) einer der Aufnahmeeinheiten (36, 37) aufzunehmen.

14. Lageranordnung nach einem Anspruch 13, **dadurch gekennzeichnet, dass** das ringförmige Element (38) der ersten Aufnahmeeinheit (36) in Tangentialrichtung verlaufende Anformungen (41) zur Aufnahme der zugehörigen Federeinheit (39) aufweist.

15. Lageranordnung nach Anspruch 13 oder Anspruch 14, **dadurch gekennzeichnet, dass** das ringförmige Element (38) der zweiten Aufnahmeeinheit (37) in Radialrichtung verlaufende Anformungen (43) zur Aufnahme der zugehörigen Federeinheit (39) aufweist.

16. Elektromechanische Servolenkung mit einem Antriebsmodul, welches einen Antriebsmotor (11), ein Gehäuse (22), ein Schneckengetriebe (10) und eine Lageranordnung umfasst, wobei das Schneckengetriebe (10) eine Schneckenwelle (12) mit einer Schneckenwellendrehachse (13) und ein Schneckenrad (14) mit einer Schneckenraddrehachse (15) umfasst, und wobei die Schneckenwelle (12) in der Lageranordnung gelagert ist, **dadurch gekennzeichnet, dass** die Lagerordnung gemäß einem der Ansprüche 1 bis 15 ausgebildet ist.

## Claims

1. A bearing arrangement for mounting a worm shaft (12) meshing with a worm wheel (14) in a housing (22) of an electromechanical power steering system, comprising a first rotary bearing (19), a second rotary bearing (20) and a pivoting ring (21), wherein the first rotary bearing (19) is configured so as to permit a pivoting movement of the worm shaft (12), wherein the pivoting ring (21) comprises a first pivoting ring component (24, 36) and a second pivoting ring component (25, 37) and is configured to act resiliently between the second rotary bearing (20) and the housing (22), and wherein the second rotary bearing (20) is at least partially arranged in the pivoting ring (21) between the first pivoting ring component (24, 36) and the second pivoting ring component (25, 37), **characterized in that** the first pivoting ring component (24, 36) has two first points (33, 39), with respect to which the first pivoting ring component (24, 36) is configured resiliently, and the second pivoting ring component (25, 37) has two second points (26, 39), with respect to which the second pivoting ring component (25, 37) is configured resiliently.

2. The bearing arrangement as claimed in claim 1, **characterized in that** the first two points (33, 39) form a first axis (34, 42) and the second two points (26, 39) form a second axis (28, 44), wherein the first axis (34, 42) and the second axis (28, 44) are not congruent.

3. The bearing arrangement as claimed in claim 1 or claim 2, **characterized in that** the two first points (33, 39) and the two second points (26, 39) are in each case sprung supporting points.

4. The bearing arrangement as claimed in one of claims 1 to 3, **characterized in that** the pivoting ring (21) is configured so as to form a pivot axis, in particular in such a way that the pivot axis runs orthogonally to the radial vector of the worm wheel (14).

5. The bearing arrangement as claimed in one of claims 1 to 4, **characterized in that** the pivoting ring (21) is configured in such a manner that the pivot axis is formed by the two first points (33, 39) and the two second points (26, 39).

6. The bearing arrangement as claimed in one of claims 1 to 5, **characterized in that** the pivoting ring (21) via the two first points (33, 39) and the two second points (26, 39) changes the position of the pivot axis depending on the direction of rotation of the worm shaft (12).

7. The bearing arrangement as claimed in one of claims 1 to 6, **characterized in that** the pivoting ring (21) via the two first points (33, 39) and the two second points (26, 39) changes the position of the pivot axis depending on the amount of the load torque that is to be overcome.

8. The bearing arrangement as claimed in one of claims 1 to 7, **characterized in that** the second rotary bearing (20) has an outer ring (45), wherein the outer ring (45) forms a shoulder (46) or a step, on which the first pivoting ring component (24, 36) and/or the second pivoting ring component (25, 37) are/is arranged, wherein in particular the shoulder (46) or the step serves as a mechanical stop for the first pivoting ring component (24, 36) and/or the second pivoting ring component (25, 37).

9. The bearing arrangement as claimed in one of claims 1 to 8, **characterized in that** the second rotary bearing (20) has an outer ring (45), wherein the outer ring (45) forms a shoulder (46), wherein the shoulder (46) is held in a form-fitting manner by the pivoting ring (21).

10. The bearing arrangement as claimed in one of claims 1 to 9, **characterized in that** the pivoting ring (21) comprises a slotted ring (24) as the first pivoting ring component and a sleeve-shaped element (25) as the second pivoting ring component.

11. The bearing arrangement as claimed in claim 10, **characterized in that** a first radially inner slot (29) in the shape of an arc of a circle and a second radially outer slot (30) in the shape of an arc of a circle are formed in the slotted ring (24), wherein the first slot (29) and the second slot (30) are partially superimposed in the circumferential direction such that a first partial circular ring (31) and a second partial circular ring (32) are produced, wherein the first partial circular ring (31) and the second partial circular ring (32) are connected by two webs (33) as the two first points.

12. The bearing arrangement as claimed in claim 10 or claim 11, **characterized in that** the sleeve-shaped element (25) comprises a disk-shaped portion with a central recess and a wall portion which is connected to the disk-shaped portion at the radially outer edge thereof and extends in the axial direction of the worm shaft (12), wherein tongues (26) are formed in the disk-shaped portion as the two second points, wherein the tongues (26) each extend in the axial direction of the worm shaft (12), the tongues (26) being positioned in particular in such a manner that the axis (28) connecting the tongues (26) is an axis passing through the longitudinal axis of the worm shaft (12).

13. The bearing arrangement as claimed in one of claims 1 to 9, **characterized in that** the pivoting ring (21) comprises a first receiving unit (36) with a central recess as the first pivoting ring component and a second receiving unit (37) with a central recess as the second pivoting ring component, wherein the first receiving unit (36) and the second receiving unit (37) each comprise an annular element (38) and a spring unit (39) for the spring mounting acting in the axial direction, wherein the spring unit (39) in each case forms the two first points and the two second points, and **in that** the pivoting ring (21) in particular comprises a supporting element (40) with a central recess, wherein the supporting element (40) is configured so as to receive the spring unit (39) of one of the receiving units (36, 37).

14. The bearing arrangement as claimed in claim 13, **characterized in that** the annular element (38) of the first receiving unit (36) has moldings (41) running in the tangential direction for receiving the associated spring unit (39).

15. The bearing arrangement as claimed in claim 13 or claim 14, **characterized in that** the annular element (38) of the second receiving unit (37) has moldings (43) running in the radial direction for receiving the associated spring unit (39).

16. An electromechanical power steering system with a drive module which comprises a drive motor (11), a housing (22), a worm gear (10) and a bearing arrangement, wherein the worm gear (10) comprises a worm shaft (12) with a worm shaft axis of rotation (13) and a worm wheel (14) with a worm wheel axis of rotation (15), and wherein the worm shaft (12) is mounted in the bearing arrangement, **characterized in that** the bearing arrangement is configured in accordance with one of claims 1 to 15.

## Revendications

1. Agencement de palier pour le montage d'un arbre à vis sans fin (12) engrenant avec une roue à vis sans fin (14) dans un boîtier (22) d'une direction assistée électromécanique, comprenant un premier palier de rotation (19), un deuxième palier de rotation (20) et une bague de pivotement (21), le premier palier de rotation (19) étant conçu de telle sorte, permettre un mouvement de pivotement de l'arbre à vis sans fin (12), la bague de pivotement (21) comprenant un premier composant de bague de pivotement (24, 36) et un deuxième composant de bague de pivotement (25, 37) et étant adaptée pour agir de manière élastique entre le deuxième palier de pivotement (20) et le boîtier (22), et dans lequel le deuxième palier de pivotement (20) est disposé dans la bague de pivotement (21) au moins partiellement entre le premier composant de bague de pivotement (24, 36) et le deuxième composant de bague de pivotement (25, 37), **caractérisé en ce que** le premier composant de bague de pivotement (24, 36) comporte deux premiers points (33, 39), par rapport auxquels le premier composant annulaire de pivotement (24, 36) est réalisé de manière élastique, et le deuxième composant annulaire de pivotement (25, 37) présente deux deuxièmes points (26, 39), par rapport auxquels le deuxième composant annulaire de pivotement (25, 37) est réalisé de manière élastique.

2. Agencement de palier selon la revendication 1, **caractérisé en ce que** les deux premiers points (33, 39) forment un premier axe (34, 42) et les deux seconds points (26, 39) forment un second axe (28, 44), le premier axe (34, 42) et le second axe (28, 44) n'étant pas superposables.

3. Agencement de bord de palier selon la revendication 1 ou la revendication 2, **caractérisé en ce que** les deux premiers points (33, 39) et les deux deuxièmes points (26, 39) sont respectivement des points d'appui à ressort.

4. Agencement de palier selon l'une des revendications 1 à 3, **caractérisé en ce que** la bague de pivotement (21) est configurée de manière à former un axe de pivotement, notamment de manière à ce que l'axe de pivotement soit orthogonal au vecteur radial de la roue hélicoïdale (14).

5. Agencement de palier selon l'une des revendications 1 à 4, **caractérisé en ce que** la bague pivotante (21) est configurée de telle sorte que l'axe de pivotement est formé par les deux premiers points (33, 39) et les deux seconds points (26, 39).

6. Agencement de palier selon l'une des revendications 1 à 5, **caractérisé en ce que** la bague pivotante (21) modifie la position de l'axe de pivotement en fonction du sens de rotation de l'arbre à vis sans fin (12) par l'intermédiaire des deux premiers points (33, 39) et des deux deuxièmes points (26, 39).

7. Agencement de palier selon l'une des revendications 1 à 6, **caractérisé en ce que** la bague pivotante (21) modifie la position de l'axe de pivotement en fonction de la valeur du couple de charge à surmonter par l'intermédiaire des deux premiers points (33, 39) et des deux deuxièmes points (26, 39).

8. Agencement de palier selon l'une des revendications 1 à 7, **caractérisé en ce que** le deuxième palier rotatif (20) présente une bague extérieure (45), la bague extérieure (45) formant un épaulement (46) ou un talon sur lequel est disposé le premier composant annulaire de pivotement (24, 36) et/ou le deuxième composant annulaire de pivotement (25, 37), l'épaulement (46) ou le talon servant notamment de butée mécanique pour le premier composant annulaire de pivotement (24, 36) et/ou le deuxième composant annulaire de pivotement (25, 37).

9. Agencement de palier selon l'une des revendications 1 à 8, **caractérisé en ce que** le deuxième palier rotatif (20) comporte une bague extérieure (45), la bague extérieure (45) formant un épaulement (46), l'épaulement (46) étant reçu par complémentarité de forme par la bague pivotante (21).

10. Agencement de palier selon l'une quelconque des revendications 1 à 9, **caractérisé en ce que** la bague pivotante (21) comprend une bague fendue (24) en tant que premier composant de bague pivotante et un élément en forme de manchon (25) en tant que second composant de bague pivotante.

11. Agencement de palier selon la revendication 10, **caractérisé en ce qu'** une première fente (29) radialement intérieure, en forme d'arc de cercle, et une deuxième fente (30) radialement extérieure, en forme d'arc de cercle, sont formées dans la bague fendue (24), la première fente (29) et la deuxième fente (30) se superposant partiellement dans la direction circonférentielle, de sorte qu'il se forme un premier anneau circulaire partiel (31) et un deuxième anneau circulaire partiel (32), le premier anneau circulaire partiel (31) et le deuxième anneau circulaire partiel (32) étant reliés par deux entretoises (33) constituant les deux premiers points.

12. Agencement de palier selon la revendication 10 ou la revendication 11, **caractérisé en ce que** l'élément en forme de manchon (25) comprend une partie en forme de disque avec un évidement central et une partie de paroi reliée à la partie en forme de disque au niveau de son bord radialement extérieur et s'étendant dans la direction axiale de l'arbre à vis sans fin (12), des languettes (26) étant formées dans la partie en forme de disque en tant que les deux seconds points, les languettes (26) s'étendant chacune dans la direction axiale de l'arbre à vis sans fin (12), les languettes (26) étant positionnées en particulier de telle sorte que l'axe (28) reliant les languettes (26) soit un axe passant par l'axe longitudinal de l'arbre à vis sans fin (12).

13. Agencement de palier selon l'une quelconque des revendications 1 à 9, **caractérisé en ce que** la bague pivotante (21) comprend une première unité de réception (36) à évidement central constituant le premier composant de la bague pivotante et une deuxième unité de réception (37) à évidement central constituant le deuxième composant de la bague pivotante, la première unité de réception (36) et la deuxième unité de réception (37) comprenant chacune un élément annulaire (38) et une unité de ressort (39) pour la suspension agissant dans la direction axiale, l'unité de ressort (39) formant respectivement les deux premiers points et les deux deuxièmes points, et **en ce que** la bague pivotante (21) comprend en particulier un élément de support (40) avec un évidement central, l'élément de support (40) étant conçu de manière à recevoir l'unité de ressort (39) d'une des unités de réception (36, 37).

14. Agencement de palier selon une revendication 13, **caractérisé en ce que** l'élément annulaire (38) de la première unité de réception (36) présente des formations (41) s'étendant dans la direction tangentielle pour recevoir l'unité de ressort (39) correspondante.

15. Agencement de palier selon la revendication 13 ou la revendication 14, **caractérisé en ce que** l'élément annulaire (38) de la deuxième unité de réception (37) présente des conformations (43) s'étendant dans la direction radiale pour recevoir l'unité de ressort (39) correspondante.

16. Direction assistée électromécanique avec un module de propulsion comprenant un moteur de propulsion (11), un boîtier (22), un engrenage à vis sans fin (10) et un agencement de paliers, dans laquelle l'engrenage à vis sans fin (10) comprend un arbre à vis sans fin (12) avec un axe de rotation d'arbre à vis sans fin (13) et une roue à vis sans fin (14) avec un axe de rotation de roue à vis sans fin (15), et dans laquelle l'arbre à vis sans fin (12) est logé dans l'agencement de paliers, **caractérisée en ce que** l'agencement de paliers est réalisé selon l'une des revendications 1 à 15.
